# EUROPÄISCHE PATENTSCHRIFT

(11) **EP 2 323 228 B1**
(45) Veröffentlichungstag und Bekanntmachung des Hinweises auf die Patenterteilung: **11.09.2013**
(21) Anmeldenummer: 10014313.0
(22) Anmeldetag: 05.11.2010
(51) Int. Cl.: H01R 13/58, H01R 13/59, H02G 15/007, H01R 13/506

(54) **Steckverbindergehaeuse mit gewinkeltem Zugentlastungselement**
Connector housing with angled strain relief element
Boîtier de connecteur doté d'un élément coudé de reprise des contraintes

(30) Priorität: 14.11.2009 DE 102009053364
(43) Veröffentlichungstag der Anmeldung: 18.05.2011
(73) Patentinhaber: HARTING Electronics GmbH, 32339 Espelkamp (DE)
(72) Erfinder: Lindkamp, Marc, 32312 Luebbecke (DE)

(56) Entgegenhaltungen:
- EP-A1- 0 175 827
- US-A- 4 629 276
- US-A- 5 104 337
- US-A1- 2006 094 281

## Beschreibung

Die Erfindung betrifft ein Steckverbindergehäuse zur Verklemmung und Krümmung eines mit einem Steckverbinder verbundenen elektrischen Kabels, wobei das Steckverbindergehäuse aus einem Isolierkörper und einem daran in verschiedenen Ausrichtungen lösbar fixierbaren, gewinkelten Zugentlastungselement besteht und wobei das Zugentlastungselement eine mit einem Gewinde versehene Aufnahmehülse und eine Druckschraube aufweist.

Eine derartige Vorrichtung wird benötigt, um ein an Kontaktelemente eines Steckverbinders angeschlossenes Kabel mit möglichst geringem Biegeradius und gleichzeitig unter möglichst geringer mechanischer Beanspruchung abzuwinkeln. Dadurch soll der gekrümmte Bereich des Kabels, beispielsweise beim Einsatz in Schaltschränken, möglichst gering gehalten werden.

### Stand der Technik

Im Stand der Technik sind bereits einige Lösungen zur gewinkelten Führung von Kabeln bekannt.

Aus der DE 20 2007 008 980 U1 ist ein Winkel-Kabel-Anschlussmodul bekannt. Ein darin offenbartes gewinkeltes Anschlussteil besteht aus zwei verschiedenen Teilen, die über einen Clipmechanismus mit einander verbunden werden. Dadurch werden sie einerseits an einem Verbindungsabschnitt fixiert und klemmen andererseits auch den Mantel des Kabels zugentlastend ein.

In dem gewinkelten, schützenden Anschlussteil verläuft das Kabel mantellos und gekrümmt. Das gewinkelte Anschlussteil ist vor einer Befestigung am Steckverbinder gegenüber diesem drehbar, wodurch den winkelmäßigen Gegebenheiten der Installation vor Ort genüge getan werden soll.

Der Nachteil einer solchen bekannten Anordnung besteht darin, dass das gewinkelte Anschlussteil auch im befestigtem Zustand nur eine verhältnismäßig geringe Stabilität sowohl gegenüber einer Verdrehung als auch gegenüber den Zugkräften des Kabels aufweist.

Aus der US 6 284 973 ist eine Zugentlastung für ein Kabel bekannt, die aus einer Basis mit einer schlauchartigen Verlängerung besteht. Die schlauchartige Verlängerung besitzt eine Vielzahl von biegsamen Armen die sich durch Aufschrauben einer Mutter, die im Inneren einen konischen Bereich besitzt, verengen lassen.

Nachteilig wirkt sich bei derartigen Zugentlastungen aus, dass bei den bekannten Klemmsystemen die Kabelklemmung nur geringe Zugkräfte aufnehmen kann, da die Klemmarme in Richtung der Zugkraft weisen und somit keine größeren Klemmkräfte auf das Kabel ausüben können.

Aus der US 4 629 276 A ist ein Steckverbindergehäuse zur Verklemmung und Krümmung eines mit einem Steckverbinder verbundenen elektrischen Kabels bekannt. Das Steckverbindergehäuse besteht aus einem Körper und einem daran in verschiedenen Ausrichtungen lösbar fixierbaren, gewinkelten Zugentlastungselement. Dieses Dokument offenbart eine zu dem dargestellten Ausführungsbeispiel alternative Gestaltung, wobei der Körper an einer Stirnseite eine Öffnung umgeben von einem quadratischen Kragen aufweist, wobei der Kragen eine umlaufende Ausnehmung aufweist und wobei das Zugentlastungselement an einer Frontseite eine zur Öffnung des Körpers passende Anschlussöffnung sowie eine die Anschlussöffnung an vier Seiten umgebende Schiene aufweist. Die Schiene ist dann an ihrer offenen Seite formschlüssig in die Ausnehmung des Kragens einschiebbar.

### Aufgabenstellung

Der Erfindung liegt daher die Aufgabe zugrunde, die mechanische Stabilität eines Eingangs erwähnten Steckverbindergehäuses zu erhöhen, so dass das gewinkelte Zugentlastungselement nach seiner Fixierung nicht mehr verdreht werden kann und weiterhin auch hohen Zugkräften des Kabels standhält.

Diese Aufgabe wird dadurch gelöst, dass der Isolierkörper an einer Stirnseite eine Öffnung, umgeben von einem quadratischen Kragen, aufweist, wobei der Kragen eine umlaufende Ausnehmung aufweist, und dass das Zugentlastungselement an einer Frontseite eine zur Öffnung des Isolierkörpers passende Anschlussöffnung sowie eine die Anschlussöffnung an drei Seiten umgebende und zur vierten Seite offene Schiene aufweist, wobei die Schiene an ihrer offenen Seite formschlüssig in die Ausnehmung des Kragens einschiebbar ist, und dass die Aufnahmehülse an einer der Frontseite gewinkelt abgewandten Rückseite des Zugentlastungselements angeordnet ist und mindestens eine Aussparung mit einem darin angeordneten, dreiseitig freigestellten Klemmelement aufweist.

Vorteilhafte Ausgestaltungen der Erfindung sind in den Unteransprüchen angegeben.

Bei der Erfindung handelt es sich um eine Vorrichtung die benötigt wird, um ein Kabel, das gekrümmt und an Kontaktelemente eines Steckverbinders angeschlossen ist, an diesem Steckverbinder zu verklemmen, das Kabel dabei insbesondere in dem nicht ummantelten und daher besonders stark gekrümmten Bereich vor mechanischen Belastungen zu schützen, sowie den gesamten Krümmungsbereich des Kabels zu verringern. Dabei bezeichnet der Begriff "Krümmungsbereich" einen Bereich, der mit dem Steckgesicht des Steckverbinders beginnt und an dem Bereich des Kabels endet, der im Wesentlichen wieder ungekrümmt verläuft.

Vorteilhafterweise besitzt das Klemmelement, das in einer Aussparung der Aufnahmehülse dreiseitig freigestellt angeordnet ist, ein freies, in Richtung der Abwinklung weisendes Ende. Das Klemmelement weist weiterhin an einer, radial nach außen zeigenden Fläche eine Verdickung auf, die zum befestigten Ende des Klemmelementes eine abflachende, schräge Fläche bildet. Durch Aufschrauben einer Druckschraube auf das Gewinde der Aufnahmehülse wird das Klemmelement radial nach innen gedrückt. Besonders vorteilhaft wirkt sich dabei aus, dass das offene Ende des Klemmelements in Richtung der Abwinklung weist, denn in der gleichen Richtung wird bei der Montage des Steckverbinders auch das Kabel in die Aufnahmehülse eingeschoben. Zum einen kann dadurch das Klemmelement bei der Einführung des Kabels nicht verkanten und beschädigt werden. Zum anderen ist das Klemmelement somit entgegengesetzt zu der Zugrichtung des Kabels ausgerichtet und kann dadurch besonders hohe Zugkräfte aufnehmen, wodurch der nicht ummantelte Bereich des Kabels innerhalb des Steckverbinders besonders gut geschützt ist.

Ein wesentlicher mit der Erfindung erzielter Vorteil besteht darin, dass das gewinkelte Zugentlastungselement nach seiner Fixierung am Isolierkörper ein hohes Maß an Stabilität gegen eine Verdrehung aufweist. Weiterhin ist die Fixierung des Zugentlastungselements am quadratischen Kragen des Isolierkörpers in vier verschiedenen Ausrichtungen möglich. Dies ermöglicht vier verschiedne Richtungen des Kabelabgangs, was für die meisten Anwendungen, beispielsweise beim Einsatz im Schaltschrank, ausreichend ist. Die Montage des Steckverbinders wird durch die seitliche Einschiebbarkeit des Zugentlastungselements in den Isolierkörper gegenüber dem Stand der Technik erheblich vereinfacht.

Das Steckverbindergehäuse besteht im Wesentlichen aus nur wenigen Teilen, was die Herstellung und die Handhabung vereinfacht und sich zusätzlich stabilisierend auswirkt.

Da die Krümmung des elektrischen Kabels überwiegend im mantellosen Bereich innerhalb des Steckverbinders stattfindet, wird das Kabel dabei auch keiner großen mechanischen Belastung ausgesetzt. Auch bei einer zusätzlichen Krümmung des Kabels in seinem ummantelten Bereich außerhalb des Steckverbinders ergibt sich durch den Einsatz eines gewinkelten Zugentlastungselements zumindest eine Verringerung des Krümmungsbereichs.

Vorteilhaft ist dafür eine Winklung des Zugentlastungselements zwischen 30° und 60°, insbesondere zwischen 40° und 50°, bevorzugt 45°, weil dadurch der Krümmungsbereich für einen Großteil der üblichen Anwendungen gering gehalten wird.

Durch die seitliche Einschiebbarkeit mit anschließender Verrastung gestaltet sich diese Bauform nicht nur stabil sondern auch besonders kompakt und platzsparend, denn dies ermöglicht montagebedingt einen engen Abstand der Abwinklung zum Isolierkörper und demzufolge einen sehr geringen Krümmungsradius im nicht ummantelten Bereich des Kabels.

Besonders vorteilhaft für die Stabilität des Steckverbindergehäuses wirkt es sich weiterhin aus, wenn das in den Isolierkörper eingeschobene Verriegelungselement in diesem verrastet. Dazu besitzt der Isolierkörper Verrastungsaussparungen in der umlaufenden Ausnehmung seines quadratischen Kragens und die Schiene des Zugentlastungselements weist dazu passende Rastnasen auf. Weiterhin ist es für die Stabilität der Verrastung vorteilhaft, wenn an den offenen Enden der Schiene zusätzlich Rasthaken angeformt sind, die im eingeschobenen Zustand hinter der Ausnehmung verrasten.

Vorteilhafterhafterweise sind das Material und die Geometrie des Steckverbindergehäuses dabei bezüglich seiner notwendigen Verformbarkeit aufeinander angestimmt. Dadurch wird einerseits gewährleistet, dass das Steckverbindergehäuse eine ausreichende Festigkeit aufweist, um das Zugentlastungselement mit der gewünschten Stabilität an dem damit verrasteten Isolierkörper zu halten. Andererseits müssen die Bauform und das Material geeignet sein, um ein häufiges Verrasten und Entrasten ohne Beschädigung des Steckverbindergehäuses, insbesondere der Schiene des Zugentlastungselements, zu ermöglichen. Dies wird dadurch gewährleistet, dass sich die Verformungen, welche sich beim Ver- und Entrastungsvorgang ergeben, möglichst gering sind und sich in einem elastischen Bereich des Materials abspielen.

In einer vorteilhaften Weiterbildung ist an jeder Seite der umlaufenden Ausnehmung des Isolierkörpers eine Verrastungsaussparung vorgesehen. An der Schiene sind entsprechende Rastnasen angeformt, welche formschlüssig in diese Verrastungsaussparungen passen. Im vollständig eingeschobenen Zustand des Zugentlastungselements in den Isolierkörper rasten diese Rastnasen in die Verrastungsaussparungen ein. Vorteilhafterweise handelt es sich dabei um genau zwei Rastnasen, die mittig an den zwei gegenüberliegenden Seiten der im wesentlichen U-förmigen Schiene angeordnet sind. Weiterhin sind die vier Verrastungsaussparungen ebenfalls mittig an den Seiten des quadratischen Kragens in dessen Ausnehmung angeordnet. Das Zugentlastungselement kann somit in vier verschiedenen Ausrichtungen am Isolierkörper angebracht werden.

In einer weiteren vorteilhaften Weiterbildung weist die Schiene an ihren offenen Enden angeformte Rasthaken auf. Diese Rasthaken sind dafür vorgesehen, im vollständig eingeschobenen Zustand hinter der umlaufenden Ausnehmung zu Verrasten, um für zusätzliche Stabilität zu sorgen.

In einer bevorzugten Ausbildungsform weist die Aufnahmehülse des Zugentlastungselements genau vier Aussparungen mit jeweils einem Klemmelement auf. Die Druckschraube ist im Wesentlichen als Hohlzylinder ausgeformt und mit einem Innengewinde versehen, um auf die Aufnahmehülse aufgeschraubt zu werden. An der Rückseite der Druckschraube ist eine Öffnung vorgesehen, durch die das anzuschließende Kabel geführt wird.

In einer zweckmäßigen Ausbildungsform verfügt die Druckschraube an ihrer Außenfläche über An- oder Ausformungen, insbesondere mehrerer Flächenelemente die entweder ein besseres händisches Greifen der Schraube oder aber ein Ansetzten von Werkzeug ermöglichen. In der ersten Variante ist eine ungerade Anzahl von Flächenelementen an der Außenfläche der Druckschraube vorgesehen, durch die ein Ansetzen eines Maulschlüssels oder dergleichen verhindert oder zumindest erschwert werden soll, um übermäßige Krafteinwirkung in Folge von derartigen Fehlbedienungen zu vermeiden. In der zweiten Variante wird dementsprechend eine gerade Anzahl von Flächenelementen bevorzugt, wodurch sich immer zwei Flächen gegenüber stehen, was den Einsatz eines entsprechenden Werkzeugs ermöglicht.

In einer weiteren zweckmäßigen Ausbildungsform sind die Klemmelemente am steckseitigen, inneren Ende mit zusätzlichen Mitteln versehen, die eine bessere Haftung des Klemmelementes am Kabel ermöglichen.

Eine vorteilhafte Weiterbildung sieht am Zugentlastungselement zusätzlich eine Dichtung vor, um das Eindringen von Wasser und Schmutz zu verhindert.

In einer vorteilhaften Ausgestaltung weist das Steckverbindergehäuse ein Kodierelement auf. Das Zugentlastungselement weist dazu eine entsprechende Aufnahme auf, in die das Kodierelement eingefügt werden kann. Das Kodierelement ist dabei farblich markiert und/oder mit einem RFID (Radio Frequency Ididentification) ― Transponder ausgestattet. Durch die farbliche Markierung kann eine grobe Zuordnung schnell und intuitiv durchgeführt werden. Die RFID-Kodierung besitzt den Vorteil, dass eine entsprechend hohe Zahl von Kodierungen möglich ist und dementsprechend viele Anschlüsse kodiert und mit Hilfe einer entsprechenden Leseinrichtung ihrer Quelle zugeordnet werden können. Dies kann beispielsweise bei der Zuordnung einzelner Kabel eines umfangreichen Kabelstrangs in Festinstallationen von besonders großem Nutzen sein.

### Ausführungsbeispiel

Ein Ausführungsbeispiel der Erfindung ist in der Zeichnung dargestellt und wird im folgenden näher erläutert. Es zeigen:

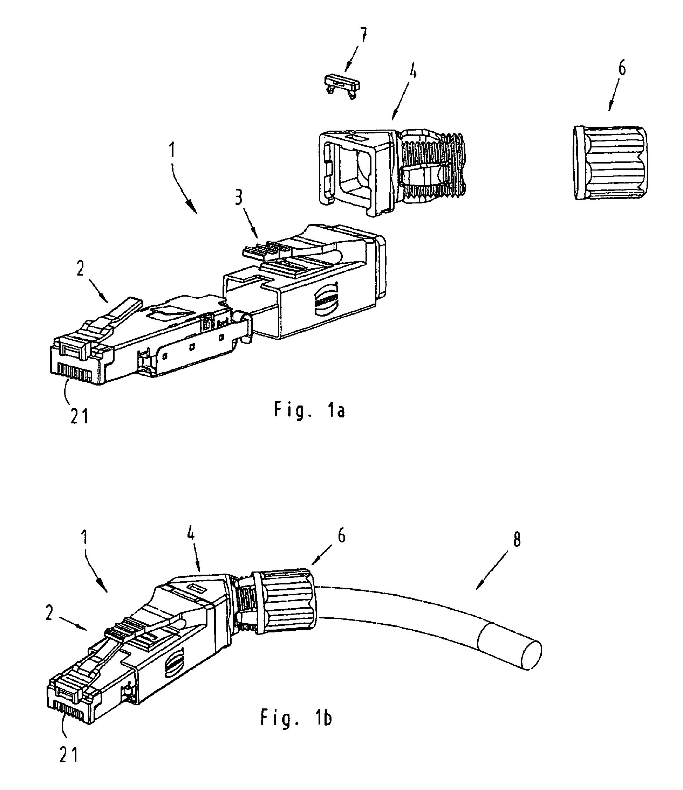

- Fig. 1 a: einen nicht montierten Steckverbinder,
- Fig. 1 b: einen montierten Steckverbinder mit Kabel,
- Fig. 2a: einen Isolierkörper und ein Zugentlastungselement in einer ersten Ansicht,
- Fig. 2b: einen Isolierkörper und ein Zugentlastungselement in einer zweiten Ansicht,
- Fig. 3a: einen montierten Steckverbinder mit einem in einer ersten Richtung daran fixierten Zugentlastungselement,
- Fig. 3b: einen montierten Steckverbinder mit einem in einer zweiten Richtung daran fixierten Zugentlastungselement,
- Fig. 3c: einen montierten Steckverbinder mit einem in einer dritten Richtung daran fixierten Zugentlastungselement,
- Fig. 3d: einen montierten Steckverbinder mit einem in einer vierten Richtung daran fixierten Zugentlastungselement,
- Fig. 4a: ein Zugentlastungselement in räumlicher Ansicht mit teils aufge schraubter Druckschraube,
- Fig. 4b: ein Zugentlastungselement in räumlicher Ansicht,
- Fig. 4c: ein Zugentlastungselement in der Draufsicht auf die Aufnahmehülse und
- Fig. 4d: ein Zugentlastungselement mit Druckschraube im länglichen Schnitt.

In der Fig. 1 a ist ein nicht montierter Steckverbinder 1, bestehend aus einem Steckereinsatz 2 und einem Steckergehäuse, dargestellt. Das Steckergehäuse umfasst einen Isolierkörper 3, ein Zugentlastungselement 4, eine Druckschraube 6 und ein Kodierelement 7. Der Steckereinsatz 2 weist ein Steckgesicht 21 auf.

Die Fig. 1b stellt einen montierten Steckverbinder 1 mit einer aufgeschraubten Druckschraube 6 und einem dadurch am Zugentlastungselement 4 fixierten Kabel 8 dar. Der Bereich zwischen dem Steckgesicht 21 des Steckereinsatzes 2 und dem Bereich, in dem das Kabel wieder ungekrümmt verläuft, wird als Krümmungsbereich bezeichnet.

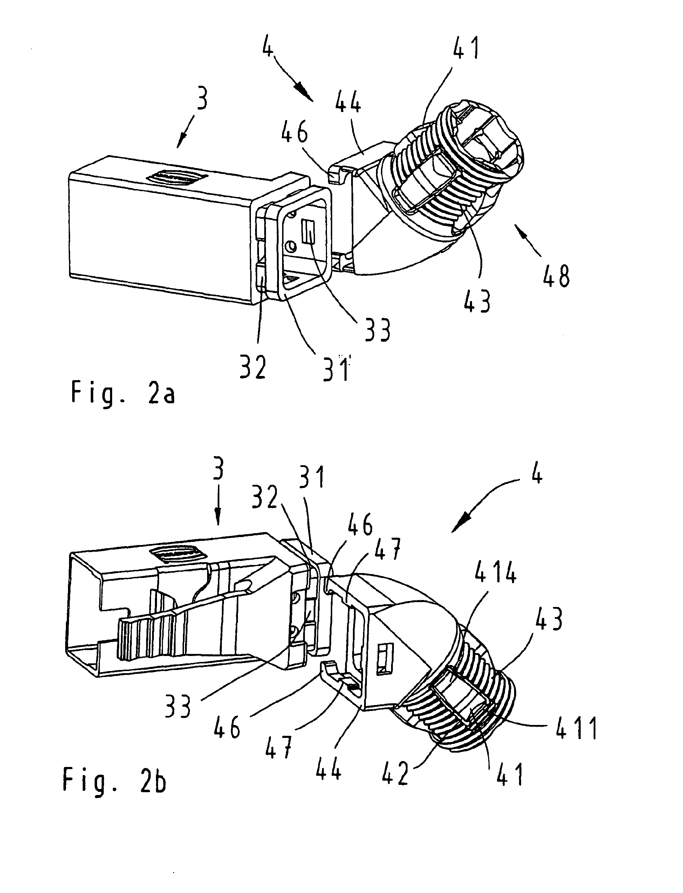

Die Fig. 2a und die Fig. 2b stellen einen Isolierkörper 3 und ein gewinkeltes Zugentlastungselement 4 in unterschiedlichen Ansichten dar. Der Isolierkörper 3 weist an einer Stirnseite eine Öffnung, umgeben von einem quadratischen Kragen 31, auf. Dieser Kragen 31 besitzt eine umlaufende Ausnehmung 32. Der quadratische Kragen 31 weist weiterhin an allen vier Seiten innerhalb dieser Ausnehmung 32 Verrastungsaussparungen 33 auf, von denen der Übersichtlichkeit wegen jeweils nur eine in jeder Figur markiert ist.

Das Zugentlastungselement 4 besitzt an einer Frontseite eine zur Öffnung des Isolierkörpers 3 passende Anschlussöffnung mit einer diese Anschlussöffnung an drei Seiten umgebende und zu der vierten Seite hin offene Schiene 44. Diese Schiene 44 verläuft dementsprechend im Wesentlichen U-förmig und weist an ihren beiden Enden jeweils einen Rasthaken 46 auf. In der Mitte ihrer beiden gegenüberliegenden Seiten besitzt die U-förmige Schiene jeweils eine Rastnase 47.

Beim Einschieben der Schiene 44 in die Ausnehmung 32 verformen sich die Rasthaken 46 und Rastnasen 47 zunächst. Im vollständig eingeschobenen Zustand verrasten die Rasthaken 46 jeweils hinter der Ausnehmung 32 und die Rastnasen 47 verrasten in den jeweiligen Verrastungsaussparungen 33. Das Zugentlastungselement 4 kann in vier verschiedenen Richtungen am Isolierkörper 3 form- und kraftschlüssig fixiert werden.

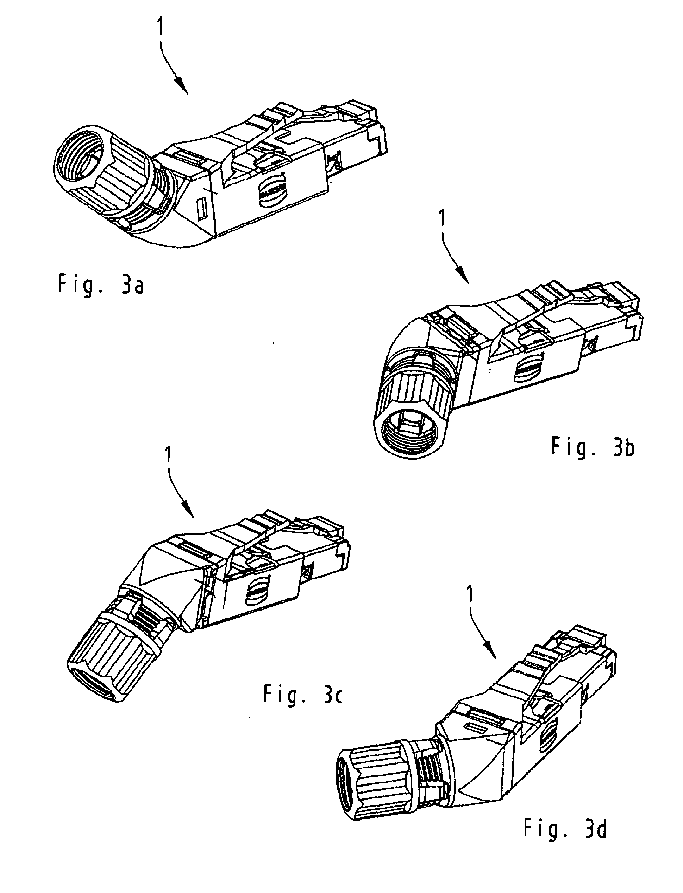

Die Fig.3a, 3b, 3c und 3d zeigen dementsprechend einen montierten Steckverbinder 1, bei dem das Zugentlastungselement 4 jeweils um 90° gedreht an dem Isolierkörper 3 angebracht ist.

Das Zugentlastungselement 4 besitzt weiterhin, wie bereits aus den Fig. 2a und Fig. 2b hervorgeht, an einer der Frontseite gewinkelt abgewandten Rückseite eine Aufnahmehülse 48 mit einem Gewinde 43. Weiterhin existieren in der Aufnahmehülse Aussparungen 42 mit darin befindlichen Klemmelementen 41. Diese Klemmelemente 41 sind dreiseitig freigestellt und besitzen dementsprechend ein freies Ende 414, welches in Richtung der Abwinklung weist. Dementsprechend ist das Klemmelement 41 in Richtung eines offenen Endes 482 der Aufnahmehülse 48 mit einem befestigten Ende 411 an dieser Aufnahmehülse 48 befestigt. Das offene Ende 482 der Aufnahmehülse 48 ist für die Einführung des elektrischen Kabels 8 vorgesehen.

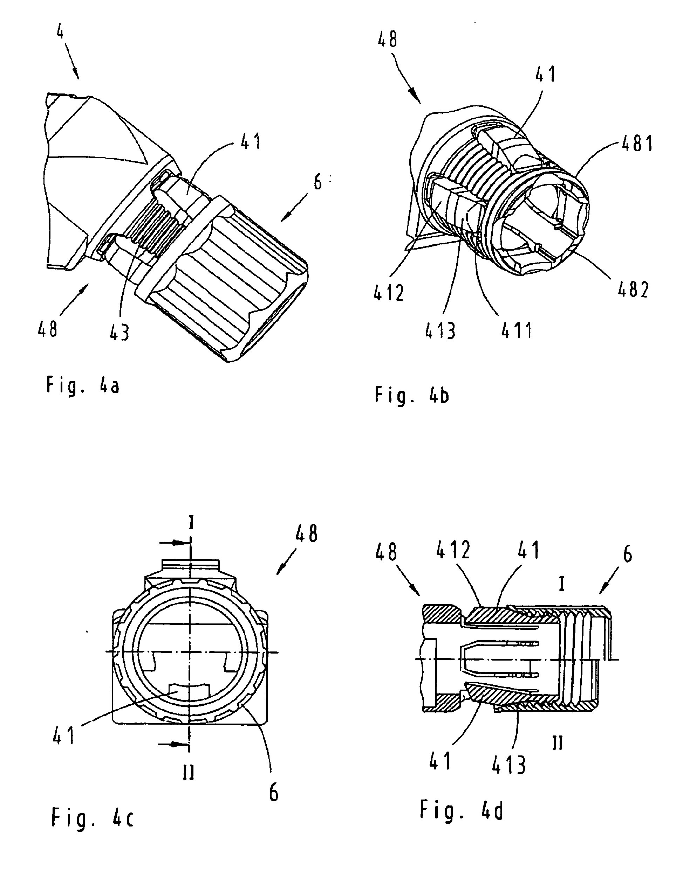

Die Fig. 4a zeigt ein Zugentlastungselement 4 mit der dazugehörigen Aufnahmehülse 48, auf deren Gewinde 43 eine Druckschraube 6 teilweise aufgeschraubt ist.

Die Aufnahmehülse 48 ist im Wesentlichen zylindrisch ausgebildet und dient zur Aufnahme eines in das Steckverbindergehäuse 1 einzuführenden elektrischen Kabels 8, das mit Kontaktelementen des Steckereinsatzes 2 verbunden ist. Auf das Gewinde 43 der Aufnahmehülse 48 lässt sich die Druckschraube 6 aufschrauben. In der Aufnahmehülse 48 sind über den Umfang verteilt Aussparungen 42 vorgesehen, in denen jeweils ein Klemmelement 41 angeordnet ist. Dabei ragen diese Klemmelemente 41 radial über den Umfang der Aufnahmehülse 48 hinaus. Bei weiterem Aufschrauben der Druckschraube 6, übt diese Druckschraube eine Kraft auf die Klemmelemente 4 aus und drückt die Klemmelemente 4 nach innen.

In der Fig. 4b ist die Aufnahmehülse 48 mit ihrem offenen Ende 482 dargestellt. Über den Umfang dieser Aufnahmehülse sind vier Aussparungen 42 gleichmäßig verteilt. In jeder Aussparung 42 ist ein Klemmelement 41 vorgesehen, das dreiseitig freigestellt ist und in Richtung des offenen Endes 482 der Aufnahmehülse 48 befestigt ist.

Die Klemmelemente 41 weisen an ihrem über den Umfang 481 der Aufnahmehülse 48 hinausragenden Teil eine Verdickung 412 auf. Zum befestigten Ende 411 hin flacht die Verdickung 412 ab und bildet so eine schräge Fläche 413, auf die beim Aufschrauben der Druckschraube 6 diese einwirkt.

Die Fig. 4c zeigt die Aufnahmehülse 48 in einer Draufsicht. Die Klemmelemente 41 ragen im hier dargestellten Ausgangszustand in den Innenbereich des Steckverbinders hinein. Dabei ist auch die Schnittlinie I, II für die Fig. 4d eingefügt.

In der Fig. 4d ist ein Steckverbindergehäuse 1 mit einer Druckschraube 6 im Schnitt entlang der Längsachse dargestellt, wobei im oberen Bereich die Druckschraube 6 nur teilweise auf die Aufnahmehülse 48 aufgeschraubt ist und im,unteren Bereich die Druckschraube 6 vollständig auf die Aufnahmehülse 48 aufgeschraubt ist. Zu erkennen ist, wie die Druckschraube 6 an der schrägen Fläche 413 des Klemmelementes 41 anliegt und beim Aufschrauben eine Kraft auf dieses ausübt. Bei weiterem Aufschrauben bewegt sich das freie Ende 414 des Klemmelementes 41 radial nach innen und wirkt gegebenenfalls auf ein in der Aufnahmehülse 48 angeordnetes elektrisches Kabel 8 ein.

## Patentansprüche

1. Steckverbindergehäuse zur Verklemmung und Krümmung eines mit einem Steckverbinder (1) verbundenen elektrischen Kabels, wobei das Steckverbindergehäuse aus einem Isolierkörper (3) und einem daran in verschiedenen Ausrichtungen lösbar fixierbaren, gewinkelten Zugentlastungselement (4) besteht und wobei das Zugentlastungselement (4) eine mit einem Gewinde (43) versehene Aufnahmehülse (48) und eine Druckschraube (6) aufweist, wobei der Isolierkörper (3) an einer Stirnseite eine Öffnung, umgeben von einem quadratischen Kragen (31), aufweist, wobei der Kragen (31) eine umlaufende Ausnehmung (32) aufweist, und dass das Zugentlastungselement (4) an einer Frontseite eine zur Öffnung des Isolierkörpers (3) passende Anschlussöffnung sowie eine die Anschlussöffnung an drei Seiten umgebende und zur vierten Seite offene Schiene (44) aufweist, wobei die Schiene (44) an ihrer offenen Seite formschlüssig in die Ausnehmung (32) des Kragens (31) einschiebbar ist, und wobei die Aufnahmehülse (48) an einer der Frontseite gewinkelt abgewandten Rückseite des Zugentlastungselements (4) angeordnet ist und mindestens eine Aussparung (42) mit einem darin angeordneten, dreiseitig freigestellten Klemmelement (41) aufweist.

2. Steckverbindergehäuse gemäß Anspruch 1, **dadurch gekennzeichnet, dass** an der umlaufenden Ausnehmung (32) Verrastungsaussparungen (33) vorgesehen sind und dass an der Schiene (44) formschlüssig in diese Verrastungsaussparungen (33) passende Rastnasen (47) angeformt sind.

3. Steckverbindergehäuse gemäß Anspruch 2, **dadurch gekennzeichnet, dass** die Rastnasen (47) an zwei gegenüberliegenden Seiten der Schiene (44) angeordnet sind.

4. Steckverbindergehäuse gemäß Anspruch 1, **dadurch gekennzeichnet, dass** die Schiene (44) zwei Enden besitzt, an denen jeweils ein Rasthaken (46) angeformt ist.

5. Steckverbindergehäuse gemäß Anspruch 1, **dadurch gekennzeichnet, dass** das dreiseitig freigestellte Klemmelement (41) ein freies Ende (414) aufweist, welches in Richtung der Abwinklung des Zugentlastungselements (4) weist.

6. Steckverbindergehäuse gemäß Anspruch 1, **dadurch gekennzeichnet, dass** die Aufnahmehülse (48) an ihrer von der Anschlussöffnung abgewandten Seite ein offenes Ende (482) aufweist, das zur Einführung eines elektrischen Kabels (8) geeignet ist.

7. Steckverbindergehäuse gemäß Anspruch 6, **dadurch gekennzeichnet, dass** das dreiseitig freigestellte Klemmelement (41) in Richtung des offenen Endes (482) der Aufnahmehülse (48) an dieser befestigt ist.

8. Steckverbindergehäuse gemäß Anspruch 1, **dadurch gekennzeichnet, dass** das Klemmelement (41) an seiner, radial nach außen zeigenden Fläche eine Verdickung (412) aufweist, die zu einem befestigten Ende (411) des Klemmelementes (41) eine abflachende, schräge Fläche (413) bildet, und somit dazu geeignet ist, durch das Aufschrauben der Druckschraube (6) auf die Aufnahmehülse (48) das Klemmelement (41) radial nach innen zu drücken.

9. Steckverbindergehäuse gemäß Anspruch 8, **dadurch gekennzeichnet, dass** die Verdickung (412) des Klemmelements (41) radial über einen Umfang (481) der Aufnahmehülse (48) hinausragt.

10. Steckverbindergehäuse nach einem der vorstehenden Ansprüche, **dadurch gekennzeichnet, dass** das Klemmelement (41) zur Fixierung des elektrischen Kabels (8) eine Keilform aufweist.

## Claims

1. A plug connector housing for clamping and bending an electric cable connected to a plug connector (1), the plug connector housing consisting of an insulating body (3) and an angled strain relief element (4) that can be releasably fixed in place thereon in different orientations, and the strain relief element (4) including a receiving sleeve (48) provided with a thread (43) and a pressure screw (6), the insulating body (3) having an opening on a front end, the opening being surrounded by a square collar (31), the collar (31) having a continuously surrounding recess (32), and the strain relief element (4) having, on a front side, a connection opening matching the opening of the insulating body (3) and a rail (44) which surrounds the connection opening on three sides and is open towards the fourth side, the rail (44) being adapted to be pushed by its open side into the recess (32) of the collar (31) with an interlocking fit, and the receiving sleeve (48) being arranged on a rear side of the strain relief element (4) facing away from the front side at an angle and having at least one cutout (42) with a clamping element (41) which is arranged therein and exposed on three sides.

2. The plug connector housing according to claim 1, **characterized in that** latching cut-outs (33) are provided on the continuously surrounding recess (32) and **in that** latching noses (47) which fit into these latching cut-outs (33) with an interlocking fit are integrally molded with the rail (44).

3. The plug connector housing according to claim 2, **characterized in that** the latching noses (47) are arranged on two opposite sides of the rail (44).

4. The plug connector housing according to claim 1, **characterized in that** the rail (44) has two ends, each having a latching hook (46) integrally molded thereon.

5. The plug connector housing according to claim 1, **characterized in that** the clamping element (41) exposed on three sides has a free end (414) which points in the direction of the angled portion of the strain relief element (4).

6. The plug connector housing according to claim 1, **characterized in that** on its side facing away from the connection opening, the receiving sleeve (48) has an open end (482) which is suitable for introducing an electric cable (8).

7. The plug connector housing according to claim 6, **characterized in that** the clamping element (41) exposed on three sides is attached to the receiving sleeve (48) in the direction of the open end (482) thereof.

8. The plug connector housing according to claim 1, **characterized in that** on its surface facing radially outwards, the clamping element (41) includes a thickened portion (412) which forms an oblique surface (413) flattening towards an attached end (411) of the clamping element (41) and which is therefore suitable to press the clamping element (41) radially inwards by the pressure screw (6) being screwed onto the receiving sleeve (48).

9. The plug connector housing according to claim 8, **characterized in that** the thickened portion (412) of the clamping element (41) protrudes radially beyond a circumference (481) of the receiving sleeve (48).

10. The plug connector housing according to any of the preceding claims, **characterized in that** the clamping element (41) has a wedge shape for fixing the electric cable (8) in place.

## Revendications

1. Boîtier de connecteur enfichable pour pincer et courber un câble électrique connecté à un connecteur enfichable (1), le boîtier de connecteur enfichable étant constitué par un corps isolant (3) et par un élément de décharge en traction (4) coudé susceptible d'y être fixé de façon amovible dans différentes orientations, l'élément de décharge en traction (4) comprenant une douille de logement (48) pourvue d'un filetage (43) et une vis de compression (6), le corps isolant (3) présentant sur un côté frontal une ouverture entourée par une collerette carrée (31), la collerette (31) présentant un évidement périphérique (32), et l'élément de décharge en traction (4) présentant sur un côté frontal une ouverture de raccordement adaptée à l'ouverture du corps isolant (3), ainsi qu'un rail (44) entourant l'ouverture de raccordement sur trois côtés et ouvert vers le quatrième côté, le rail (44) pouvant s'enficher sur son côté ouvert par coopération de formes dans l'évidement (32) de la collerette (31), la douille de logement (48) étant agencée sur un côté arrière, coudé et détourné du côté frontal, de l'élément de décharge en traction (4), et comprenant au moins une échancrure (42) pourvue d'un élément de pincement (41) agencé dans celle-ci et dégagé sur trois côtés.

2. Boîtier de connecteur enfichable selon la revendication 1, **caractérisé en ce que** des échancrures d'enclenchement (33) sont prévues au niveau de l'évidement périphérique (32), et **en ce que** des ergots d'enclenchement (47) s'adaptant en coopération de formes à ces échancrures d'enclenchement (33) sont conformés sur le rail (44).

3. Boîtier de connecteur enfichable selon la revendication 2, **caractérisé en ce que** les ergots d'enclenchement (47) sont agencés sur deux côtés opposés du rail (44).

4. Boîtier de connecteur enfichable selon la revendication 1, **caractérisé en ce que** le rail (44) possède deux extrémités sur lesquelles est conformé respectivement un crochet d'enclenchement (46).

5. Boîtier de connecteur enfichable selon la revendication 1, **caractérisé en ce que** l'élément de pincement (41) dégagé sur trois côtés comprend une extrémité libre (414) qui est dirigée en direction du coudage de l'élément de décharge en traction (4).

6. Boîtier de connecteur enfichable selon la revendication 1, **caractérisé en ce que** la douille de logement (48) comprend sur son côté détourné de l'ouverture de raccordement une extrémité ouverte (482) qui convient à l'introduction d'un câble électrique (8).

7. Boîtier de connecteur enfichable selon la revendication 6, **caractérisé en ce que** l'élément de pincement (41) dégagé sur trois côtés est fixé sur la douille de logement (48) en direction de l'extrémité ouverte (482) de cette dernière.

8. Boîtier de connecteur enfichable selon la revendication 1, **caractérisé en ce que** sur sa surface dirigée radialement vers l'extérieur l'élément de pincement (41) présente un épaississement (412) qui constitue une surface oblique (413) qui s'aplatit vers une extrémité fixée (411) de l'élément de pincement (41), et qui convient donc pour pousser l'élément de pincement (41) radialement vers l'intérieur par vissage de la vis de compression (6) sur la douille de logement (48).

9. Boîtier de connecteur enfichable selon la revendication 8, **caractérisé en ce que** l'épaississement (412) de l'élément de pincement (41) dépasse radialement au-delà d'une périphérie (481) de la douille de logement (48).

10. Boîtier de connecteur enfichable selon l'une des revendications précédentes, **caractérisé en ce que** l'élément de pincement (41) présente une forme en coin pour fixer le câble électrique (8).
